# EUROPEAN PATENT SPECIFICATION

(11) **EP 0 627 160 B1**
(45) Date of publication and mention of the grant of the patent: **29.12.1997**
(21) Application number: 94201313.7
(22) Date of filing: 10.05.1994
(51) Int. Cl.: A01K 1/10, A01K 5/02

(54) **Device and method for placing food within reach of animals**
Vorrichtung und Verfahren zum Setzen von Futter in Reichweite der Tiere
Dispositif et procédé pour placer l'alimentation à la portée des animaux

(30) Priority: 19.05.1993 NL 9300873
(43) Date of publication of application: 07.12.1994
(73) Proprietor: HEJO v.o.f., NL-3454 JA De Meern (NL)
(72) Inventor: Van Blokland, Petrus Johannes Maria, NL-3554 JA De Meern (NL)
(74) Representative: Land, Addick Adrianus Gosling

(56) References cited:
- EP-A- 0 043 098
- EP-A- 0 608 032
- DE-U- 8 016 891
- DE-U- 8 021 740

## Description

Animal sheds, for instance cowsheds, are usually equipped with a feeding place where the cows are able freely to eat at their own pleasure. In contemporary practice, silage is also deposited at this feeding place for the animals by the farmer.

From the European patent application EP-A-0061817, moveable feeding gates are known where large amounts of silage are deposited by the farmer in a central area, between two opposite, moveable feeding gates, these feeding gates being moved towards each other when the animals are no longer able to reach the food.

It has been established that such moveable feeding gates lead to a greater silage intake of the animals which in turn leads to a decreased use of concentrate, thus yielding a saving in costs for the farmer. A disadvantage of these moveable feeding gates is, however, the sizable facilities which have to be provided in existing sheds.

Further a device is disclosed in the European patent application EP-A-0043098 for shifting food blocks. This known device comprises a number of carriages which are driven by a single driving motor via, for instance, chains as guiding elements. Such a device makes access to the side away from the feeding gate impossible. Furthermore, the floor of an existing shed has to be cut out in order to install the guiding elements under the level of the floor.

The present invention has for its object to improve upon the above apparatus of the prior art and/or to obviate the disadvantages associated therewith.

The present invention provides a device for placing food on a floor within reach of one or more animals, comprising;
- a baffle like element against which food is to be deposited;
- moving means for moving the baffle like element to a feeding place, said moving means comprising a driving motor and a shaft driven by said motor; and
- one or more guiding elements, comprising one or more chains operatively connected to said shaft for guiding the baffle like element along the floor upon movement by said moving means, **characterized in that** said driving motor is mounted on the side of the baffle like element away from the side where the food is to be deposited, and in that said guiding elements extend along the floor.

With a device according to the present invention only small adjustments need to be carried out in existing animal sheds. The arrangement of the shed can remain unaltered. The baffle like element prevents the feed from coming into contact with the side away from the feeding gate. Because the moving means are associated with the device, a compact and independently operating device is provided.

According to a preferred embodiment, the device according to the present invention is provided with a plate sloping downwardly from such baffle like element, whereby a balanced position thereof is maintained.

According to a further preferred embodiment, the device according to the present invention is provided with one or more wheels for moving the device along the floor with minor friction.

Further the present invention provides a method for placing food at the feeding place on the floor within reach of one or more animals, comprising the step of moving the baffle like element with deposited food along one or more guiding elements extending on or just above the floor in a first direction from a starting position towards said feeding place, characterized by returning said baffle like element to said starting position by securing the guiding elements to the floor at one or more locations located at the side away from the feeding place relative to the baffle like element, whereafter the baffle like element is moved along the guiding elements to the starting position and the guiding elements are loosened from said locations.

Free access to the back side of the baffle like element is safeguarded by the method according to the present invention, as the chain ends on that side can be loosened when the baffle like element is slowly shifted in the direction towards the feeding gate.

Further advantages, characteristics and details of the present invention will become clear from the following description of the preferred embodiment thereof, with reference to the accompanying diagrams in which:

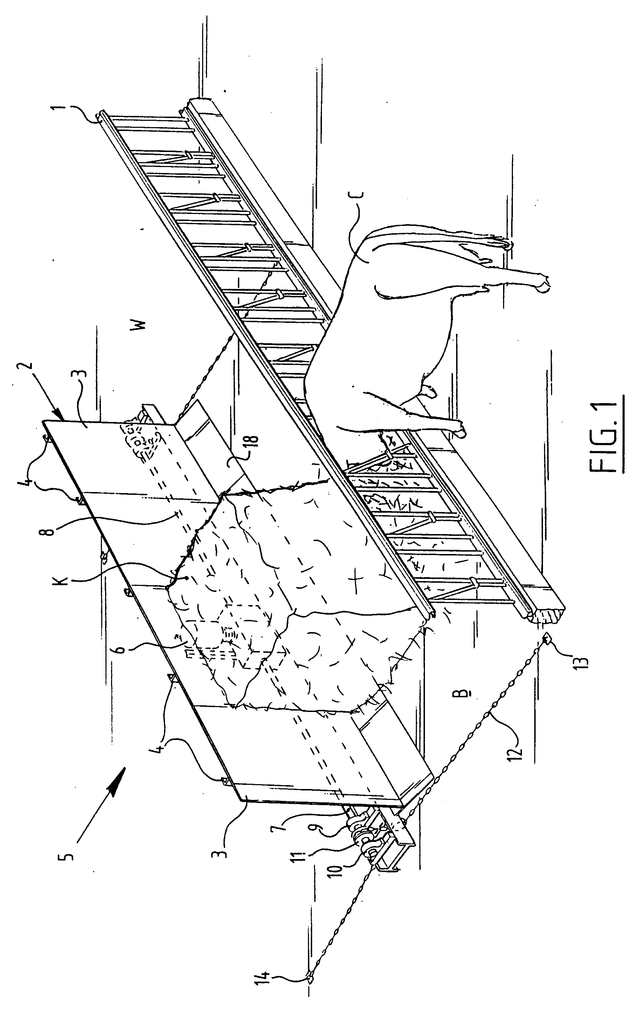

fig. 1 is a perspective view of a first preferred embodiment of the present invention set up in an animal shed;

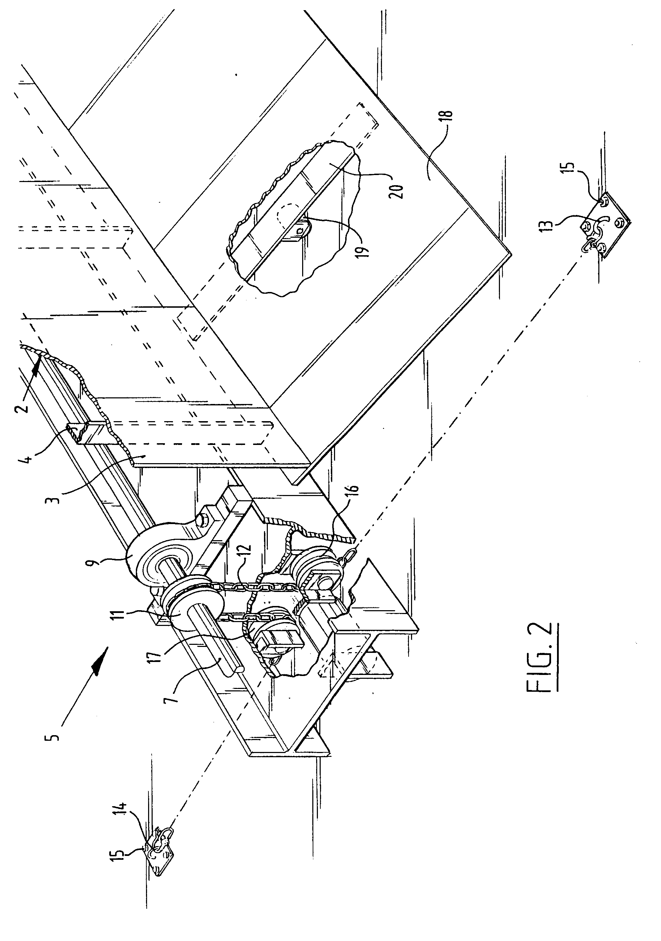

fig. 2 is a partly broken away perspective view of detail II from figure 1; and
fig. 3 is a perspective view of a second embodiment of the device according to the present invention.

A feeding place is generally built into an animal shed, for instance a cowshed W, where one or more cows C can eat silage K by sticking their heads through a securely fixed gate 1. The silage K is deposited against a baffle like element 2, which is for instance formed by steel plates 3 which are secured to metal profiles 4. Behind the baffle like element 2 of the preferred embodiment 5 of the present invention, a drive motor 6, shown with broken lines, is provided which is driven by shafts 7, 8 which extend to the respective ends of the baffle like element 2. A nestwheel 11 is secured to the shaft 7 between two bearings 9 and 10, and engages onto a chain 12. The chain 12 is anchored to the floor of the animal shed, preferably by means of for example key bolts 15 secured to the floor by eyes 13 and 14 respectively.

The chain 12 is guided by two rotatable bearing mounted diskwheels 16 and 17 respectively. On driving the shaft 7 in one or the other direction, the device 5 is moved to or away from the feeding gate 1. When the amount of silage directly in front of the feeding gate 1 has been eaten, the baffle like element 2 is moved a short distance in the direction of the gate 1 so that the cows can continue eating.

For stability, the device 5 is provided with a preferably slightly inclined plate 18, extending in the direction of the feeding gate 1, on the side of the device 5 facing the feeding gate 1. A relatively small wheel 19 is rotatably provided on a supporting part 20 of the plate 18. Not shown are somewhat larger wheels associated under the device 5. In addition, the inclined plate 18 prevents any food from remaining unreachable by the animals.

Thanks to the baffle like element, the silage cannot fall in an undesirable direction, i.e. a direction in which it becomes unreachable for the animals.

The above described embodiment of the present invention is elegantly simple with regard to construction, avoids interfering with an existing animal shed as much as possible, and leaves a lot of space for arranging the location of feeding places in an animal shed in both existing and to be built sheds.

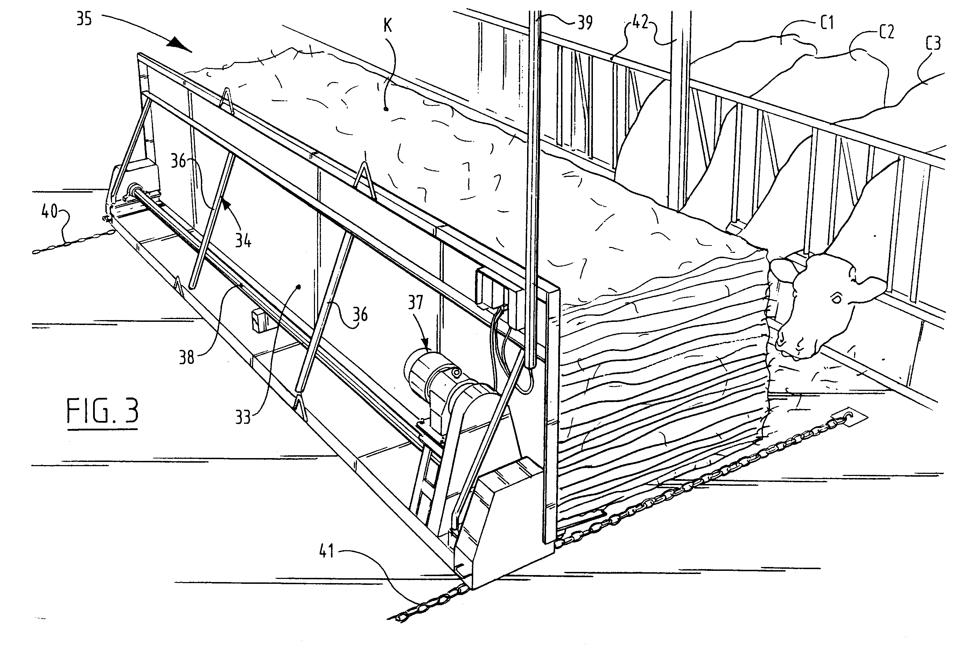

In a second preferred embodiment 35 (figure 3) of the device, according to the present invention, the baffle like element 33 is supported by means of a construction 34 which comprises a number of inclined supports 36. A drive motor 37, mounted on one side, drives a shaft 38, the motor 37 being supplied with power by a lead 39. The chain ends 40 and 41 can be loosened by slowly shifting the device 35 in the direction of the feeding gate 42 in order to safeguard, as much as possible, the free access to this side of the device 35.

The present invention is not limited to the above described embodiments, but rather being determined by the following claims in which a baffle like element is recited which offers sufficient engagement with the food.

Within the scope of the present invention, many different variants are conceivable with respects to the described and depicted embodiments, wherefrom a few non-limiting are the following:
- the moving means can for instance comprise a flat plate, which can slide over the floor; and
- the chain which is secured to the side away from the feeding gate, will in practice only be present during the moving back of the baffle like element to the initialposition, in order to avoid this chain being an obstacle on the floor of the shed. On moving the baffle like element back, the same chain can then be used as during the movement in the direction of the feeding gate. In such an embodiment of the device, a loose end thereof will therefore be found near the baffle like element.

## Claims

1. A device for placing food (K) on a floor within reach of one or more animals (C), comprising;
- a baffle like element (2, 33) against which food (K) is to be deposited;
- moving means (6, 7, 11, 37, 38) for moving the baffle like element (2, 33) to a feeding place, said moving means comprising a driving motor (6,7) and a shaft (7, 38) driven by said motor; and
- one or more guiding elements (12), comprising one or more chains (12) operatively connected to said shaft (7, 38) for guiding the baffle like element (2, 33) along the floor upon movement by said moving means, **characterized in that** said driving motor (6, 37) is mounted on the side of the baffle like element away from the side where the food is to be deposited, and in that said guiding elements (12) extend along the floor.

2. A device according to claim 1, comprising a plate (18) spaced from the floor and extending at an obtuse angle, sloping downwardly from said baffle like element (2, 33), over such a distance that the balanced position of the baffle like element is maintained.

3. A device according to claim 1 or 2, wherein said moving means comprise a nestwheel (11) associated with the shaft and for engaging the chain (12).

4. A device according to any of claim 1 - 3, provided with one or more wheels (19) for moving the baffle like element (2, 33) over the floor with minor friction.

5. A method for placing food (K) at the feeding place on the floor within reach of one or more animals (C), comprising the step of moving the baffle like element (2, 33) with deposited food along one or more guiding elements (12) extending on or just above the floor in a first direction from a starting position towards said feeding place, characterized by returning said baffle like element to said starting position by securing the guiding elements to the floor at one or more locations (14) located at the side away from the feeding place relative to the baffle like element (2, 33), whereafter the baffle like element (2, 33) is moved along the guiding elements to the starting position and the guiding elements are loosened from said locations.

## Patentansprüche

1. Vorrichtung zum Plazieren von Futter (K) auf einem Boden innerhalb der Reichweite eines oder mehrerer Tiere (C), mit:
- einem wandartigen Element (2, 33), gegen das das Futter (K) angeordnet wird;
- Bewegungsmitteln (6, 7, 11, 37, 38) zur Bewegung des wandartigen Elementes (2, 33) zu einer Futterstelle, wobei die Bewegungsmittel einen Antriebsmotor (6, 7) und eine von dem Motor getriebene Welle (7, 38) umfassen; und
- einem oder mehreren Führungselementen (12), das/die eine oder mehrere Ketten (12) umfaßt/umfassen, die betriebsmäßig mit der Welle (7, 38) verbunden sind zur Führung des durch die Bewegungsmittel bewegten, wandartigen Elementes (2, 33) entlang des Bodens, dadurch gekennzeichnet, daß der Antriebsmotor (6, 37) an der Seite des wandartigen Elementes montiert ist, die nicht die Seite ist, wo das Futter angeordnet wird und daß sich die Führungselemente (12) entlang des Bodens erstrecken.

2. Vorrichtung nach Anspruch 1 mit einer Platte (18), die von dem Boden beabstandet ist und sich unter einem stumpfen Winkel erstreckt und sich über eine derartige Distanz von dem wandartigen Element (2, 33) nach unten neigt, daß die Gleichgewichtslage des wandartigen Elementes aufrechterhalten ist.

3. Vorrichtung nach Anspruch 1 oder 2, wobei die Bewegungsmittel ein mit der Welle in Verbindung stehendes Nestrad (11) umfassen, das mit der Kette (12) in Eingriff steht.

4. Vorrichtung nach einem der Ansprüche 1 bis 3 mit einem oder mehreren Rädern (19) zur Bewegung des wandartigen Elementes (2, 33) über den Boden unter geringer Reibung.

5. Verfahren zur Anordnung von Futter (K) an der Futterstelle auf dem Boden innerhalb der Reichweite eines oder mehrerer Tiere (C), das den Schritt aufweist, das wandartige Element (2, 33) mit dem angeordneten Futter entlang eines oder mehrerer Führungselemente (12) zu bewegen, die sich auf oder unmittelbar oberhalb des Bodens in eine erste Richtung von einer Startposition in Richtung der Futterstelle erstrecken, dadurch gekennzeichnet, daß das wandartige Element rückgeführt wird in die Startposition, indem die Führungselemente an einer oder mehreren Stellen (14) befestigt werden, die an der Seite angeordnet sind, die von der Futterstelle relativ zu dem wandartigen Element (2, 33) entfernt liegt, woraufhin das wandartige Element (2, 33) entlang der Führungselemente zu der Startposition bewegt wird und die Führungselemente von ihren Stellen gelöst bzw. an diesen Stellen gelockert werden.

## Revendications

1. Un dispositif pour disposer un aiment (K) sur un sol à portée d'un ou plusieurs animaux ( C), comprenant ;
- un élément formant écran (2, 33) contre lequel l'aliment (K) est destiné à être déposé ;
- des moyens de déplacement (6, 7, 11, 37, 38) pour déplacer l'élément formant écran (2, 33) vers un emplacement d'alimentation, lesdits moyens de déplacement comprenant un moteur d'entraînement (6, 7) et un arbre (7, 38) entraîné par ledit moteur ; et
- un ou plusieurs élément de guidage (12), comprenant une ou plusieurs chaînes (12) reliées fonctionnellement audit arbre (7, 38) pour guider l'élément formant écran (2, 33) le long du sol lors du déplacement par lesdits moyens de déplacement,
caractérisé en ce que ledit moteur d'entraînement (6, 37) est monté du côté de l'élément formant écran qui est opposé au côté où l'aiment doit être déposé, et en ce que lesdits éléments de guidage (12) s'étendent le long du sol.

2. Un dispositif selon la revendication 1, comprenant une plaque (18) espacée du sol et s'étendant à angle obtus, en pente vers le bas depuis ledit élément formant écran (2, 33), sur une distance telle que la position équilibrée de l'élément formant écran est maintenue.

3. Un dispositif selon la revendication 1 ou 2, dans lequel lesdits moyens de déplacement comprennent une poulie (11) associée à l'arbre et pour la mise en prise de la chaîne (12).

4. Un dispositif selon l'une des revendications 1 à 3, muni d'une ou plusieurs roues (19) pour déplacer l'élément formant écran (2, 33) sur le sol avec un frottement minimal.

5. Un procédé pour disposer un aliment (K) à l'emplacement d'alimentation sur le sol à portée d'un ou plusieurs animaux (C ), comprenant la phase consistant à déplacer l'élément formant écran (2, 33) avec l'aliment déposé le long d'un ou plusieurs éléments de guidage (12) s'étendant sur le sol ou juste au-dessus dans une première direction depuis une position de départ vers ledit emplacement d'alimentation, caractérisé par le retour dudit élément formant écran vers ladite position de départ en fixant les éléments de guidage au sol à un ou plusieurs endroits (14) disposés du côté opposé à l'emplacement d'alimentation par rapport à l'élément formant écran (2, 33), après quoi l'élément formant écran (2, 33) est déplacé le long des éléments de guidage vers la position de départ et les éléments de guidage sont détachés desdits endroits.
